# EUROPÄISCHE PATENTSCHRIFT

(11) **EP 3 425 146 B1**
(45) Veröffentlichungstag und Bekanntmachung des Hinweises auf die Patenterteilung: **01.09.2021**
(21) Anmeldenummer: 17180067.5
(22) Anmeldetag: 06.07.2017
(51) Int. Cl.: E05F 15/60, E05B 47/00, H01M 50/502, H01M 50/213, E05C 17/28

(54) **FESTSTELLVORRICHTUNG FÜR EINE BRANDSCHUTZTÜR**
DOOR HOLDER DEVICE FOR FIRE DOOR
DISPOSITIF DE RETENUE DE PORTE POUR PORTE COUPE-FEU

(43) Veröffentlichungstag der Anmeldung: 09.01.2019
(73) Patentinhaber: dormakaba Deutschland GmbH, 58256 Ennepetal (DE)
(72) Erfinder: HELLWIG, Alexander, 58256 Ennepetal (DE); SCHNEIDER, Marc Andre, 58256 Ennepetal (DE); BÖSE, Felix, 58256 Ennepetal (DE); GEHRMANN, Bernd, 58256 Ennepetal (DE)
(74) Vertreter: Balder IP Law, S.L.

(56) Entgegenhaltungen:
- EP-A1- 3 064 688
- US-A1- 2004 219 422

## Beschreibung

Die Erfindung betrifft eine Feststellvorrichtung, für eine Brandschutztür, mit einem Gehäuse und mit mehreren elektrochemischen Energiespeichern zur Energieversorgung der Türvorrichtung gemäß dem Oberbegriff des Patentanspruchs 1.

Für den sicheren Betrieb einer batteriebetriebenen Türvorrichtung ist die Verwendung von vorgeschriebenen Batterien essentiell. So kann es sein, dass bei Einbau von unerwünschten Batterie die Türvorrichtung nicht oder nicht wie vorgesehen funktioniert. Insbesondere für Brandschutztüren muss der Einbau der korrekten Batterien gewährleistet sein. Türvorrichtungen für Brandschutztüren müssen einen Brandtest durchlaufen. Der Einbau von nicht getesteten Batterien kann zu einem unbekannten, nicht getesteten Verhalten im Brandfall führen. Ein Zusammensetzen der vorgeschriebenen Batterien zu einem einzigen Batteriepaket kann jedoch zu Problemen bei der Lagerung und dem Transport führen. Das Dokument EP3064688A1 beschreibt eine Feststellvorrichtung des Stands der Technik.

Es ist die Aufgabe der Erfindung, eine Feststellvorrichtung, anzugeben, bei der auf einfache Art und Weise der Einbau der vorgeschriebenen elektrochemischen Energiespeicher gewährleistet ist, insbesondere ohne Probleme bei Lagerung und/oder Transport zu verursachen.

Diese Aufgabe wird durch gemäß dem unabhängigen Anspruch 1 gelöst. Vorteilhafte Weiterbildungen sind in den abhängigen Vorrichtungsansprüchen, der Beschreibung und in den Figuren angegeben. Die Aufgabe der Erfindung wird auch durch eine Brandschutztür mit einer erfindungsgemäßen Feststellvorrichtung gelöst. Hierbei kann die erfindungsgemäße Feststellvorrichtung wie in den Ansprüchen oder in der Beschreibung angegeben ausgebildet sein.

Die zuvor hergeleitete und aufgezeigte Aufgabe ist ausgehend von der eingangs beschriebenen Feststellvorrichtung dadurch gelöst, dass die Feststellvorrichtung zumindest zwei Speichergruppen umfasst, wobei jede Speichergruppe zumindest einen der elektrochemischen Energiespeicher und ein Einbindungselement zum Einbinden des zumindest einen elektrochemischen Energiespeichers in die übrige Feststellvorrichtung umfasst.

Dadurch, dass zumindest zwei Speichergruppen vorgesehen sind und jede Speichergruppe neben dem eigentlichen elektrochemischen Energiespeicher noch ein Einbindungselement umfasst, ist es nicht möglich, nur die elektrochemischen Energiespeicher in die Feststellvorrichtung einzusetzen. Vielmehr wird ein Monteur oder derjenige, der eine Wartung der Feststellvorrichtung vornimmt, gezwungen, die Speichergruppen mit den elektrochemischen Energiespeichern in die Feststellvorrichtung einzusetzen. Das Einbindungselement dient zur Codierung der Speichergruppe bezüglich der Feststellvorrichtung.

Das Einbindungselement dient insbesondere zur mechanischen und/oder elektrischen Codierung der Speichergruppe bezüglich der Feststellvorrichtung. Durch das Einbindungselement passt die Speichergruppe zu der übrigen Feststellvorrichtung.

Insbesondere wird mittels des Einbindungselements die elektrochemischen Energiespeicher mechanisch und/oder elektrisch in die übrige Feststellvorrichtung eingefügt. Dadurch, dass zumindest zwei Speichergruppen vorhanden sind, ist gewährleistet, dass die Speichergruppen, ohne elektrisch miteinander verbunden zu sein, transportiert und/oder gelagert werden können. Hierdurch werden Problemen bei der Lagerung und/oder dem Transport vermieden.

Die Speichergruppen sind insbesondere vor der Montage, z. B. bei einem Transport zu der zu wartenden Feststellvorrichtung, bei einem Transport der zu installierenden Feststellvorrichtung oder

in einem Lager, elektrisch voneinander getrennt. Die Speichergruppen sind bevorzugt elektrisch miteinander verbindbar. Die elektrische Verbindung der Speichergruppen ist besonders bevorzugt reversibel lösbar.

Besonders bevorzugt sind die Speichergruppen vor der Montage, z. B. bei einem Transport zu der zu wartenden Feststellvorrichtung, bei einem Transport der zu installierenden Feststellvorrichtung oder in einem Lager, mechanisch voneinander getrennt. Die Speichergruppen können somit separat voneinander ausgebildet sein. Die Speichergruppen sind bevorzugt mechanisch miteinander verbindbar. Die mechanische Verbindung der Speichergruppen ist besonders bevorzugt reversibel lösbar.

Die Speichergruppen können in das Gehäuse einsetzbar sein. Im eingesetzten Zustand können die Speichergruppen elektrisch und/oder mechanisch miteinander verbunden sein. Im betriebsfertigen Zustand der Feststellvorrichtung sind bevorzugt die Speichergruppen in dem Gehäuse eingesetzt. Im betriebsfertigen Zustand der Feststellvorrichtung sind bevorzugt die Speichergruppen elektrisch miteinander verbunden.

Es kann sein, dass jede Speichergruppe mehrere elektrochemische Energiespeicher umfasst. Wird im Folgenden die Speichergruppe mit dem elektrochemischen Energiespeicher beschrieben, so können stattdessen auch auf mehrere elektrochemische Energiespeicher gemeint sein.

Die Feststellvorrichtung kann dazu ausgebildet sein, die Gebäudetür in einem offenen Zustand zu halten und im Brandfall ein Schließen der Gebäudetür freizugeben. Die Feststellvorrichtung kann somit zum Öffnen, Schließen und/oder Feststellen einer Gebäudetür ausgebildet sein.

Die Feststellvorrichtung kann eine Steuerungsvorrichtung umfassen. Die Steuerungsvorrichtung kann zum Freigeben, Öffnen und/oder Schließen der Tür, insbesondere im Brandfall, dienen.

Die Steuerungsvorrichtung kann in dem Gehäuse der Feststellvorrichtung aufgenommen sein. Ein Feststellmechanismus zum Feststellen der Gebäudetür kann in dem Gehäuse der Feststellvorrichtung aufgenommen sein.

Das Gehäuse kann eine Rückseite umfassen. Die Rückseite ist dazu vorgesehen, an der Gebäudetür oder einer Wand befestigt zu werden.

Die Rückseite des Gehäuses kann eine Montageplatte umfassen. Die Montageplatte kann reversibel lösbar mit dem übrigen Gehäuse verbunden sein.

Insbesondere kann das Gehäuse eine Blende umfassen. Die Blende kann der Rückseite gegenüberliegend angeordnet sein. Somit kann die Blende zumindest teilweise eine Vorderseite des Gehäuses bilden.

Vorzugsweise ist vorgesehen, dass der elektrochemischen Energiespeicher derart zu dem Einbindungselement angeordnet ist, dass eine Manipulation sichtbar ist. Hierdurch ist ein Ersetzen eines vorgeschriebenen elektrochemischen Energiespeichers durch einen anderen Energiespeicher sofort sichtbar.

Der elektrochemische Energiespeicher kann mit dem jeweiligen Einbindungselement stoffschlüssig verbunden ist. Hierdurch kann der elektrochemische Energiespeicher nicht zerstörungsfrei von dem Einbindungselement lösbar sein. Hierdurch kann eine Manipulation sofort sichtbar sein. Das Einbindungselement kann mehrteilig ausgebildet sein. Die stoffschlüssige Verbindung kann zwischen einem Teil des Einbindungselements und des elektrochemischen Energiespeichers ausgebildet sein.

Es ist denkbar, dass das Einbindungselement elektrische Anschlüsse zum elektrischen Anschließen des elektrochemischen Energiespeichers umfasst. Beispielsweise kann das Einbindungselement elektrisch leitende Fahnen umfassen. Durch den elektrischen Anschluss kann zugleich der elektrochemische Energiespeicher mechanisch an dem Einbindungselement befestigt sein. Bevorzugt ist der elektrochemische Energiespeicher stoffschlüssig elektrisch leitend mit zumindest einem der elektrischen Anschlüssen, bevorzugt mit den elektrischen Anschlüssen, verbunden. Beispielsweise kann die stoffschlüssige elektrisch leitende Verbindung als ein Verschweißen oder als ein Verlöten realisiert sein. Z. B. kann der elektrochemische Energiespeicher mit zumindest einer Fahne verschweißt oder verlötet sein.

Es ist denkbar, dass mittels der elektrischen Anschlüsse, insbesondere der Fahnen, der elektrochemische Energiespeicher von dem übrigen Einbindungselement beabstandet ist. Hierdurch wird eine Wärmeübertragung von dem Einbindungselement auf den elektrochemischen Energiespeicher verringert.

Vorzugsweise ist vorgesehen, dass die Speichergruppen in dem Gehäuse elektrisch miteinander verbunden sind. Die Speichergruppen können elektrische Anschlussmittel zum elektrischen Verbinden der Speichergruppen untereinander umfassen. Bevorzugt sind die elektrischen Anschlussmittel reversibel lösbar. Die Anschlussmittel sind insbesondere als Steckverbinder ausgestaltet.

Bevorzugt können die Einbindungselemente die elektrische Anschlussmittel zum elektrischen Verbinden der Speichergruppen untereinander umfassen. Zusätzlich oder alternativ kann zumindest eine Speichergruppe, insbesondere zumindest ein Einbindungselement, ein elektrisches Anschlussmittel zum elektrischen Verbinden an einen Energieverbraucher der Feststellvorrichtung umfassen. Das elektrische Anschlussmittel zum elektrischen Verbinden an einen Energieverbraucher kann als ein Steckverbinder, d. h. als ein Stecker oder als eine Buchse, ausgebildet sein.

Bei dem Energieverbraucher der Feststellvorrichtung kann es sich insbesondere um eine Steuerungsvorrichtung handeln. Der Anschluss an den Energieverbraucher kann mittelbar ausgebildet sein. Beispielsweise kann der Energieverbraucher, z. B. die Steuerungsvorrichtung, über eine Anschlussplatine mit dem Anschlussmittel elektrisch verbunden sein.

Es kann sein, dass die Speichergruppe, insbesondere das Einbindungselement, derart in das Gehäuse einsetzbar ist, dass zugleich mit einem mechanischen Befestigungsschritt ein elektrisches Anschließen des zumindest einen elektrochemischen Energiespeichers erfolgt. Insbesondere kann ein Anschlussmittel zeitgleich mit dem mechanischen Befestigungsschritt elektrisch kontaktiert werden. Bei dem Anschlussmittel kann es sich um ein Anschlussmittel zum elektrischen Verbinden mit einer weiteren Speichergruppe oder um ein Anschlussmittel zur elektrischen Verbindung mit einem Energieverbraucher handeln. Als Befestigungsschritt kann eine Bewegung des Einbindungselements zur mechanischen Befestigung des Einbindungselements in dem Gehäuse angesehen werden. Beispielsweise kann bei der mechanischen Befestigung des Einbindungselements in dem Gehäuse zugleich eine Steckverbindung der Steckverbinder hergestellt werden. Zur mechanische Befestigung kann die Speichergruppe, insbesondere das Einbindungselement, z. B. unter einem Vorsprung geschoben werden. Der Vorsprung kann insbesondere als ein Kopf eines pilzkopfförmigen Befestigungsstücks, z. B. als ein Schraubenkopf, ausgebildet sein.

Insbesondere kann vorgesehen sein, dass das Einbindungselement eine Platine umfasst. Die Einbindungselemente können jeweils eine Platine umfassen. Insbesondere kann der elektrochemische Energiespeicher zumindest mittelbar auf der Platine befestigt, insbesondere stoffschlüssig und/oder elektrisch leitend befestigt, sein. Beispielsweise können die Anschlüsse, insbesondere die Fahnen, an der Platine befestigt sein. Die Anschlüsse, insbesondere die Fahnen, können insbesondere stoffschlüssig und/oder elektrisch leitend an der Platine befestigt sein. Z. B. können die Fahnen an der Platine festgelötet oder verschweißt sein.

Die Platine kann elektrische Leiter zum elektrischen Verbinden des elektrochemischen Energiespeichers mit dem Anschlussmittel des Einbindungselements umfassen. Das zumindest eine Anschlussmittel kann auf der Platine befestigt, insbesondere stoffschlüssig und/oder elektrisch leitend befestigt, sein. Zumindest eine Platine kann elektrische Leiter zum elektrischen Verbinden zweier Anschlussmittel umfassen.

Vorzugsweise ist vorgesehen, dass das Einbindungselement ein Halteelement zur Halterung der Platine und/oder zum Schutz der elektrischen Leiter der Platine umfasst. Die Einbindungselemente können jeweils ein Halteelement umfassen. Insbesondere können das Halteelement und die Platine reversibel lösbar miteinander mechanisch verbunden sein. Die reversibel lösbare Verbindung kann ein Form- und/oder Kraftschluss sein. Beispielsweise sind das Halteelement und die Platine miteinander verklipst.

Es ist denkbar, dass die Einbindungselemente, insbesondere die Halteelemente, Verbindungsmittel zum mechanischen Verbinden der Einbindungselemente untereinander umfassen. Hierdurch kann die mechanische Stabilität der Speichergruppen erhöht werden. Durch die Verbindungsmittel können die Einbindungselemente reversibel lösbar miteinander verbunden sein. Die Verbindungsmittel können z. B. als ein Vorsprung und eine Aufnahme ausgebildet sein. Der Vorsprung eines Einbindungselements kann z. B. in die korrespondierende Aufnahme eines weiteren Einbindungselements zur mechanischen Verbindung eingreifen.

Zusätzlich oder alternativ kann das Einbindungselement, insbesondere das Halteelement und/oder die Platine, ein Verbindungselement zum Verbinden mit einem weiteren Element der Türvorrichtung umfassen. Bevorzugt dient das Verbindungselement zur zumindest mittelbaren mechanischen Verbindung der Speichergruppe mit dem Gehäuse. Die mechanische Verbindung kann reversibel lösbar sein. Die mechanische Verbindung kann als ein Form- und/oder Kraftschluss ausgebildet sein. Das Verbindungselement kann z. B. als Öffnung oder Ausnehmung ausgebildet sein. Die Öffnung oder Ausnehmung kann z. B. zur Aufnahme des Vorsprungs, bevorzugt des pilzkopfförmigen Befestigungsstücks, besonders bevorzugt der Schraube, dienen.

Die Speichergruppen können identisch ausgebildet sein. Die Platinen mehrerer Speichergruppen können identisch zueinander ausgebildet sein. Die Halteelemente mehrerer Speichergruppen können identisch zueinander ausgebildet sein. Die Anschlussmittel mehrere Speichergruppen können identisch zueinander ausgebildet sein. Hierdurch ist die Herstellung, die Lagerung und die Montage der Speichergruppen vereinfacht. Es ist denkbar, dass durch die identische Ausbildung Anschlussmittel einer Speichergruppe in dem eingebauten Zustand ungenutzt bleibt. Es ist denkbar, dass durch die identische Ausbildung zumindest ein Verbindungsmittel einer Speichergruppe in dem eingebauten Zustand ungenutzt bleibt.

Erfindungsgemäß ist vorgesehen, dass der gesamte Lithiumgehalt der elektrochemischen Energiespeicher jeder Speichergruppe unter 2 g liegt. Hierdurch ist eine besonders sichere Lagerung der Speichergruppen und/oder ein besonders sicherer Transport zur Feststellvorrichtung möglich.

Bevorzugt kann es sein, dass die Speichergruppen einzeln in das Gehäuse einsetzbar sind. Hierdurch kann die Montage oder die Wartung erheblich erleichert werden. Die Speichergruppen können reversibel lösbar in das Gehäuse einsetzbar sein. Es kann es sein, dass die Speichergruppen einzeln in das Gehäuse herausnehmbar sind.

Insbesondere kann die Blende der Feststellvorrichtung abnehmbar ausgebildet sein. Bevorzugt ist vorgesehen, dass nach Abnehmen der Blende die Speichergruppen in das Gehäuse einsetzbar sind.

Es ist denkbar, dass die Feststellvorrichtung eine Halterung zur Aufnahme der Speichergruppen umfasst. Das Verbindungselement kann z. B. zur mechanischen Verbindung mit der Halterung dienen.

Das Einbindungselement ist bevorzugt derart ausgebildet, dass das Einbindungselement den elektrochemischen Energiespeicher von der übrigen Feststellvorrichtung beabstandet.

Insbesondere kann das Einbindungselement den elektrochemischen Energiespeicher von zumindest einer Seitenwand der Halterung und/oder dem Gehäuse, insbesondere einer Ober-und/oder Unterseite des Gehäuses, beabstanden. Hierdurch kann eine Wärmeübertragung von der Feststellvorrichtung, insbesondere von der Halterung, auf den elektrochemischen Energiespeicher verringert werden.

Das Einbindungselement kann in einer Draufsicht den elektrochemischen Energiespeicher in zumindest einer, bevorzugt zumindest zwei Raumrichtungen, überragen. So kann eine Breite des Einbindungselements größer sein als eine Breite des elektrochemischen Energiespeichers. Hierdurch kann das Einbindungselement den elektrochemischen Energiespeicher vor einer zu großen Wärmeübertragung schützen.

Es ist denkbar, dass das Einbindungselement, insbesondere das Halteelement, zumindest ein Seitenteil, bevorzugt mehrere Seitenteile, umfasst. Durch die Seitenteile kann ein Kippschutz erreicht werden. Hierdurch wird ein Kippen der Speichergruppen und damit ein erhöhter Wärmeeintrag in die elektrochemischen Energiespeicher vermieden.

Es ist denkbar, dass die Speichergruppen, insbesondere zusammen mit der Halterung, im Brandfall von der Rückseite des Gehäuses wegbewegbar sind. Hierzu kann eine Auslösevorrichtung der Feststellvorrichtung dienen. Es ist denkbar, dass die Speichergruppen, insbesondere zusammen mit der Halterung, im Brandfall aus dem Gehäuse bewegbar sind. Hierzu kann die Auslösevorrichtung dienen. Besonders bevorzugt können die Speichergruppen hierzu insbesondere zueinander verschwenken. Insbesondere können sich die Speichergruppen hierbei voneinander lösen.

Es kann vorgesehen sein, dass zwischen der Rückseite der Feststellvorrichtung und den Speichergruppen, insbesondere zwischen der Rückseite der Feststellvorrichtung und der

Halterung, ein Brandschutzmaterial angeordnet ist. Das Brandschutzmaterial kann als ein intumeszierendes Material ausgebildet sein. Durch das Brandschutzmaterial können im Brandfall die Speichergruppen von der Rückseite wegbewegbar sein.

Die erfindungsgemäße Feststellvorrichtung ist für eine Verwendung bei einer Brandschutztür vorgesehen. Durch die erfindungsgemäße Feststellvorrichtung ist die Verwendung der korrekten elektrochemischen Energiespeicher sichergestellt. Hierdurch ist ein verlässlicher Brandschutz gegeben.

Die Erfindung wird nachfolgend anhand von einem Ausführungsbeispiel näher erläutert. Technische Merkmale mit gleicher Funktion sind in den Figuren mit identischen Bezugszeichen versehen. Es zeigen:
- Fig. 1: eine erfindungsgemäße Feststellvorrichtung in einer Explosionsdarstellung,
- Fig. 2: eine Halterung und eine Auslösevorrichtung der erfindungsgemäßen Feststellvorrichtung der Figur 1,
- Fig. 3: die Halterung und die Auslösevorrichtung aus Figur 2 in einer weiteren Perspektive,
- Fig. 4: eine Seitenansicht von Teilen erfindungsgemäßen Feststellvorrichtung aus Figur 1, wobei insbesondere Seitenelemente, eine Blende und eine Montageplatte fehlen,

- Figur 5: Speichergruppen der erfindungsgemäßen Feststellvorrichtung aus Figur 1 in einer Explosionsdarstellung.

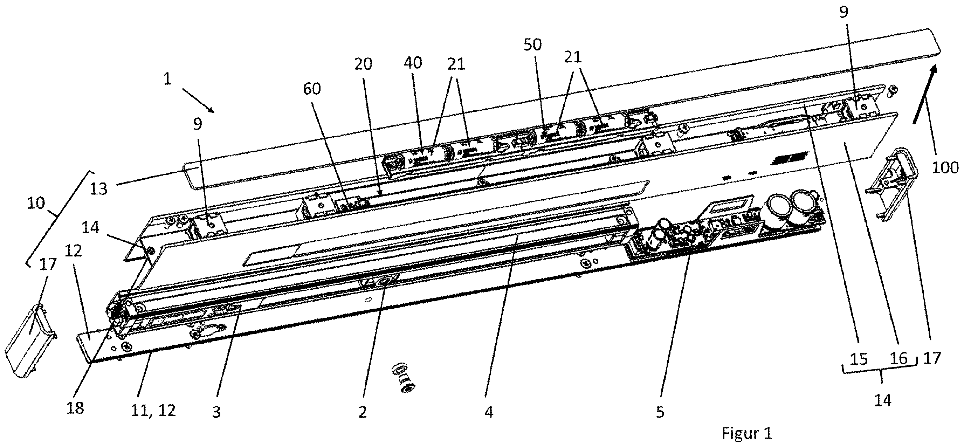

Figur 1 zeigt eine erfindungsgemäße Feststellvorrichtung 1 in einer Explosionsdarstellung. Die Feststellvorrichtung 1 dient dazu, in einem festgestellten Zustand der Feststellvorrichtung 1 eine nicht dargestellte Gebäudetür festzustellen. In einem freigebenden Zustand der Feststellvorrichtung 1 ist eine Bewegung der Gebäudetür freigegeben. Insbesondere ist die Feststellvorrichtung 1 dazu ausgebildet, die Gebäudetür in einem offenen Zustand zu halten und im Brandfall ein Schließen der Gebäudetür freizugeben. Somit ist die Feststellvorrichtung 1 zum Feststellen einer Brandschutztür geeignet.

Die Feststellvorrichtung 1 umfasst ein Gleitstück 2. Das Gleitstück 2 ist durch einen Feststellmechanismus 3 feststell- und freigebbar. Das Gleitstück 2 ist in einer Gleitschiene 4 geführt. Das Gleitstück 2 ist über einen nicht dargestellten Hebel mit der Gebäudetür, insbesondere mit der Brandschutztür, verbindbar. Eine Steuerungsvorrichtung 5 empfängt ein Signal eines Brandmelders und veranlasst daraufhin den Feststellmechanismus 3, das Gleitstück 2 freizugeben.

Die Feststellvorrichtung 1 umfasst ein Gehäuse 10. Das Gehäuse 10 umschließt die Steuerungsvorrichtung 5. Das Gehäuse 10 nimmt die Gleitschiene 4 auf.

Das Gehäuse 10 umfasst eine Rückseite 11, die zur Befestigung an einer Gebäudetür, insbesondere einem Türrahmen oder einer Wand, dient. Die Rückseite 11 wird durch eine Montageplatte 12 gebildet. Die Rückseite 11 kann eine Schicht aus intumeszierenden Material (nicht dargestellt) umfassen, die der Wand oder der Gebäudetür zugewandt ist. Die Schicht aus intumenszierenden Material kann an der Montageplatte 12 befestigt sein.

Das Gehäuse 10 umfasst eine Blende 13. Die Blende 13 ist der Rückseite 11 gegenüberliegend angeordnet. Somit bildet die Blende 13 zumindest teilweise eine Vorderseite des Gehäuses 10.

Das Gehäuse 10 umfasst eine Oberseite 15. Die Oberseite 15 ist in einem montierten Zustand der Türvorrichtung 1 einer Raumdecke zugewandt. Das Gehäuse 10 umfasst eine Unterseite 16. Die Unterseite 16 ist in einem montierten Zustand der Türvorrichtung 1 einem Raumboden zugewandt.

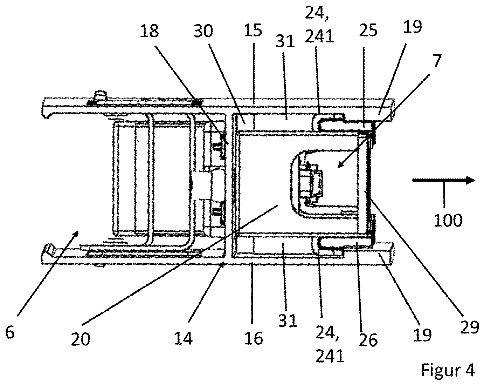

Das Gehäuse 10 kann einen H-Träger 14 umfassen. Der H-Träger 14 kann die Oberseite 15 und die Unterseite 16 umfassen. Eine Zwischenwand 18 des H-Trägers 14 verbindet die Oberseite 15 mit der Unterseite 16. Durch die Zwischenwand 18 stellt das Gehäuse 10 einen ersten Aufnahmeraum 6 und einen zweiten Aufnahmeraum 7 zur Verfügung, wie in Figur 4 dargestellt.

Der zweite Aufnahmeraum 7 ist schienenartig ausgebildet. Hierzu umfassen die Oberseite 15 und die Unterseite 16 jeweils einen Vorsprung 19 (s. Figur 4).

Das Gehäuse kann Seitenelemente 17 umfassen.

Die Feststellvorrichtung 1 umfasst elektrochemische Energiespeicher 21. Die elektrochemischen Energiespeicher 21 dienen zur Versorgung der Türvorrichtung 1, insbesondere der Steuerungsvorrichtung 5, mit elektrischem Strom. Hierbei kann insbesondere die Versorgung mit elektrischen Strom ausschließlich durch die elektrochemischen Energiespeicher 21 erfolgen. Die elektrochemischen Energiespeicher 21 sind als Batterie oder Akkumulator ausgebildet. Die elektrochemischen Energiespeicher 21 sind in einer Halterung 20 aufgenommen. Die Halterung 20 mit den elektrochemischen Energiespeichern 21 ist in dem Gehäuse 10 aufgenommen.

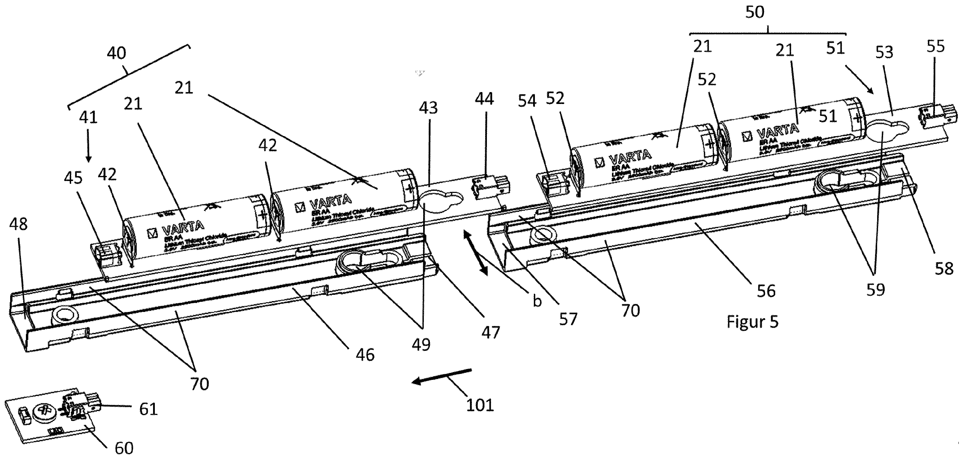

Die Feststellvorrichtung 1 umfasst zumindest zwei Speichergruppen 40, 50. Die elektrochemischen Energiespeicher 21 sind in die Speichergruppen 40, 50 aufgeteilt. Figur 5 zeigt eine Explosionsdarstellung der Speichergruppen 40, 50, auf die im Folgenden Bezug genommen wird. Beispielhaft umfasst jede der Speichergruppen 40, 50 mehrere, z. B. zwei, Energiespeicher 21. Jede der Speichergruppen 40, 50 umfasst zudem ein Einbindungselement 41, 51. Durch das Einbindungselement 41, 51 wird gewährleistet, dass nur die vorgeschriebenen elektrochemischen Energiespeicher 21 in die Türvorrichtung 1 eingesetzt werden können. Ein Monteur wird durch die Einbindungselemente 41, 51 gezwungen, die vorgesehenen gesamten Speichergruppen 40, 50 bei einer Installation oder einem Auswechseln der elektrochemischen Energiespeicher 21 einzusetzen. Hierdurch ist es dem Monteur verwehrt, nur die elektrochemischen Energiespeicher 21 ohne die Einbindungselemente 41, 51 einzusetzen.

Die elektrochemischen Energiespeicher 21 einer Speichergruppe 40, 50 sind mit dem jeweiligen Einbindungselement 41, 51 derselben Speichergruppe 40, 50 stoffschlüssig verbunden. Hierzu umfassen die Speichergruppen elektrische Anschlüsse 42, 52. Die elektrischen Anschlüsse 42, 52 sind als Fahnen ausgebildet. Die elektrischen Anschlüsse 42, 52 sind mit den elektrochemischen Energiespeicher 21 stoffschlüssig verbunden.

Die Einbindungselemente 41, 51 umfassen jeweils eine Platine 43, 53. Die elektrischen Anschlüsse 42, 52 sind insbesondere stoffschlüssig auf den Platinen 43, 53 befestigt. Somit sind die elektrochemischen Energiespeicher 21 und die dazugehörigen Einbindungselemente 41, 51 jeweils einstückig miteinander verbunden. Über die Anschlüsse 42, 52 sind die elektrochemischen Energiespeicher 21 sowohl mechanisch als auch elektrisch mit der jeweiligen Platine 43, 53 verbunden.

Während einem Transport und/oder während einer Lagerung der Speichergruppen 40, 50 sind die Speichergruppen 40, 50 elektrisch voneinander getrennt. In der Feststellvorrichtung 1 sind die Speichergruppen 40, 50 hingegen elektrisch miteinander verbunden. Hierzu umfasst jede Speichergruppe 40, 50 zumindest ein elektrisches Anschlussmittel 44, 54. Z. B. umfasst die erste Speichergruppe 40 einen Stecker 44 und die zweite Speichergruppe 50 eine Buchse 54 als elektrisches Anschlussmittel 44, 54. Die elektrischen Anschlussmittel 44, 54 sind auf der jeweilig dazugehörigen Platine 43, 53 befestigt.

Die elektrochemischen Energiespeicher 21 sind als Lithium-Ionen Batterien oder Lithium-Ionen Akkumulatoren ausgebildet. Insbesondere liegt der Lithium-Gehalt der elektrochemischen Energiespeicher 21 einer jeden Speichergruppe 40, 50 unterhalb von 2 g. Hierdurch sind die Speichergruppen 40, 50 besonders sicher zu lagern und zu transportieren.

Die Einbindungselemente 41, 51 umfassen jeweils weitere elektrische Anschlussmittel 45, 55. Das elektrische Anschlussmittel 45 dient zum Anschluss an eine Anschlussplatine 60, über die die elektrischen Energiespeicher 21 mit der Steuerungsvorrichtung 5 elektrisch verbunden sind. Die Anschlussplatine 60 umfasst hierzu einen Steckverbinder 61. Ebenfalls ist das elektrische Anschlussmittel 45 als ein Steckverbinder, z. B. als eine Buchse, ausgebildet. Die Platinen 43, 53 umfassen elektrische Leiter, um den elektrischen Strom von den elektrischen Anschlüssen 42, 52 zu den elektrischen Anschlussmitteln 45, 54 zu leiten. Ferner umfassen die Platinen elektrische Leiter, um den elektrischen Strom von den elektrischen Anschlüssen 44, 55 zu den elektrischen Anschlüssen 45, 54 zu leiten. Ein elektrischer Leiter kann zugleich dazu dienen, um den elektrischen Strom von den elektrischen Anschlüssen 42, 52 zu den elektrischen Anschlussmitteln 45, 54 und von den elektrischen Anschlüssen 44, 55 zu den elektrischen Anschlüssen 45, 54 zu leiten.

Das elektrische Anschlussmittel 55 ist in dem in den Figuren 1 bis 5 gezeigten Ausführungsbeispiel funktionslos. Prinzipiell ist das elektrische Anschlussmittel 55 aber geeignet, eine weitere Speichergruppe elektrisch anzuschließen. Durch das elektrische Anschlussmittel 55 ist es möglich, die beiden Einbindungselemente 41, 51 identisch auszubilden. Dieses erleichtert die Herstellung, die Lagerung und den Einbau der Speichergruppen 40, 50.

Jedes Einbindungselement 41, 51 umfassen jeweils ein Halteelement 46, 56. Das Halteelement 46, 56 dient zur Aufnahme der Platine 43, 53. Hierdurch werden die elektrischen Leiter der Platine 43, 53 geschützt. Zudem stabilisiert das Halteelement 46, 56 die Platine 43, 53 mechanisch. Das Halteelement 46, 56 ist mit der Platine 43, 53 reversibel lösbar verbunden, insbesondere verclipst.

Die Halteelemente 46, 56 umfassen Verbindungsmittel 47, 57, durch die die Halteelemente 46, 56 mechanisch nach einem Einsetzen in die Feststellvorrichtung 1 miteinander verbunden sind. Die Halteelemente 46, 56 umfassen weitere Verbindungsmittel 48, 58, die zur Verbindung mit weiteren Halteelementen dienen können. Die weiteren Verbindungsmittel 48, 58 sind in dem in den Figuren 1 bis 5 gezeigten Ausführungsbeispiel funktionslos. Prinzipiell sind die weiteren Verbindungsmittel 48, 58 aber geeignet, eine weitere Speichergruppe mechanisch anzubinden. Durch die weiteren Verbindungsmittel 48, 58 ist es möglich, die beiden Halteelemente 46, 56 identisch auszubilden. Dieses erleichtert die Herstellung, die Lagerung und den Einbau der Speichergruppen 40, 50. Besonders bevorzugt sind die beiden Speichergruppen 40, 50 identisch ausgebildet.

Das Halteelement 46, 56 ist derart räumlich dimensioniert, dass das Halteelement 46, 56 sich in der Halterung 20 verklemmt.

Die Halteelemente 46, 56 umfassen Seitenteile 70. Die Seitenteile 70 verhindern die ein Kippen der Speichergruppen 40, 50 in der Halterung 20.

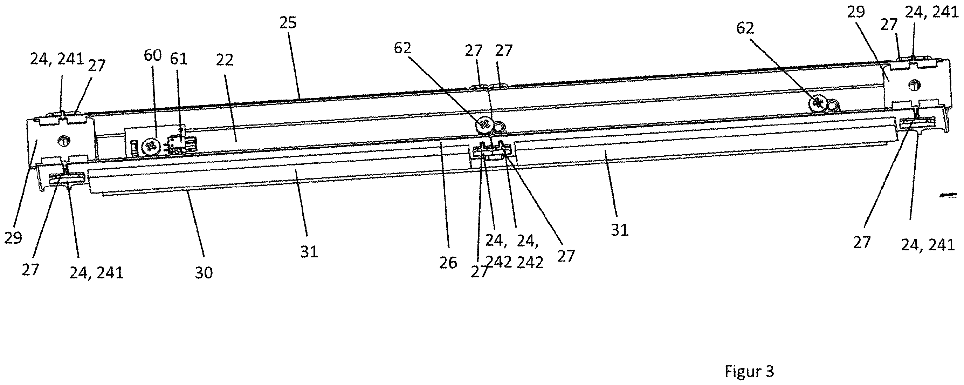

Das Einbindungselement 41, 51 umfasst ein Verbindungselement 49, 59 zum mechanischen Befestigen an der Halterung 20. Das Verbindungselement 49, 59 ist als eine Öffnung 49, 59 ausgebildet. Die Öffnung 49, 59 ist sowohl in der Platine 43, 53 als auch in dem Halteelement 46, 56 ausgebildet, so dass ein pilzkopfförmiges Befestigungsstück 62, z. B. eine Schraube (s. Figur 3) die Öffnung 49, 59 durchragen kann. Durch das Befestigungsstück 62 ist das Einbindungselement 41, 51 an der Halterung 20 befestigt.

Die Öffnung 49, 59 verjüngt sich. Das pilzköpfige Befestigungsstück 62 kann bereits vor dem Einsetzen der Speichergruppen 40, 50 in der Halterung 20 befestigt sein. Bei dem Einsetzen der Speichergruppe 40, 50 kann der breitere Teil der Öffnung 49, 59 das Befestigungsstück 62 aufnehmen. Die Befestigung der Speichergruppe 40, 50 mit der Halterung 20 erfolgt durch ein Verschieben der Speichergruppe 40, 50 gemäß der Pfeilrichtung 101 (s. Figur 5) derart, dass das Befestigungsstück 62 in dem verjüngten Teil der Öffnung 49, 59 aufgenommen wird. Der verjüngte Teil der Öffnung 49, 59 weist geringere räumliche Ausmaße als der Pilzkopf des Befestigungsstück 62 auf, so dass die Speichergruppe 40, 50 einen Formschluss mit dem Befestigungsstück 62 eingeht.

Durch das Verschieben der Speichergruppe 40, 50 unter das Befestigungsstück 62 wird zugleich eine elektrische Verbindung hergestellt.

Die Speichergruppen 40, 50 können zunächst zusammengefügt und danach gemeinsam in das Gehäuse 10 eingesetzt werden. Die Speichergruppen 40, 50 können aber auch einzeln in das Gehäuse 10 eingesetzt werden und im Gehäuse 10 miteinander verbunden werden. Zum elektrischen und mechanischen Verbinden der Speichergruppen 40, 50 untereinander innerhalb des Gehäuses 10 oder außerhalb des Gehäuses 10, werden die Speichergruppen 40, 50 ineinander verschoben.

Werden die Speichergruppen 40, 50 nacheinander in das Gehäuse 10 eingesetzt, so wird zunächst die erste Speichergruppe 40 in die Halterung 20 eingefügt. Hierbei nimmt der breitere Teil der Öffnung 49 das entsprechende Befestigungsstück 62 auf. Dann wird die Speichergruppe 40 gemäß der Pfeilrichtung 101 verschoben, so dass der verjüngte Teil der Öffnung 49 einen Formschluss mit dem Befestigungsstück 62 eingeht. Durch die Verschiebung in Pfeilrichtung 101 wird zugleich eine elektrische Verbindung des Anschlussmittels 45 mit dem Steckverbinder 61 hergestellt. Danach wird die zweite Speichergruppe 50 in die Halterung 20 eingefügt. Hierbei nimmt der breitere Teil der Öffnung 59 das entsprechende Befestigungsstück 62 auf. Dann wird die Speichergruppe 50 gemäß der Pfeilrichtung 101 verschoben, so dass der verjüngte Teil der Öffnung 59 einen Formschluss mit dem Befestigungsstück 62 eingeht. Zugleich wird eine elektrische Verbindung des Anschlussmittels 54 der zweiten Speichergruppe 50 mit dem Anschlussmittel 44 der ersten Speichergruppe 40 hergestellt. Ebenfalls wird zugleich eine mechanische Verbindung der ersten und der zweiten Speichergruppe 40, 50 durch die Verbindungsmittel 47, 57 hergestellt.

Werden die Speichergruppen 40, 50 zeitgleich in das Gehäuse 10 eingesetzt, so werden zunächst außerhalb des Gehäuses 10 die Speichergruppen 40, 50 miteinander derart verbunden, so dass eine elektrische Verbindung des Anschlussmittels 54 der zweiten Speichergruppe 50 mit dem Anschlussmittel 44 der ersten Speichergruppe 40 und zugleich eine mechanische Verbindung der ersten und der zweiten Speichergruppe 40, 50 durch die Verbindungsmittel 47, 57 hergestellt ist. Danach werden die Speichergruppen 40, 50 in die Halterung 20 eingefügt. Hierbei nehmen die breiteren Teile der Öffnungen 49, 59 jeweils das entsprechende Befestigungsstück 62 auf. Dann werden die Speichergruppe 40 gemäß der Pfeilrichtung 101 verschoben, so dass die verjüngten Teile der Öffnungen 49, 59 einen Formschluss mit dem jeweiligen Befestigungsstück 62 eingehen. Durch die Verschiebung in Pfeilrichtung 101 wird zugleich eine elektrische Verbindung des Anschlussmittels 45 mit dem Steckverbinder 61 hergestellt.

Die Halterung 20 verbleibt während eines Auswechselns der Speichergruppen 40, 50 in dem Gehäuse 10. Insbesondere verbleiben die Befestigungsstücke 62 während eines Auswechselns in dem Gehäuse 10.

Um die entladenen elektrochemischen Energiespeicher 21 auszuwechseln, ist es demnach ausreichend, die Blende 13 von dem übrigen Gehäuse 10 zu entfernen und nach dem Entfernen der Speichergruppen mit den entladenen elektrochemischen Energiespeichern 21 einen der beschriebenen Handlungsabläufe durchzuführen. Das Entfernen der Speichergruppen 40, 50 aus dem Gehäuse 10 erfolgt entgegengesetzt dem Einsetzen: Hierbei wird die zweite Speichergruppe 50 zunächst entgegen der Pfeilrichtung 101 verschoben, so dass das Befestigungsstück 62 in den breiteren Teil der Öffnung 59 gelangt. Zugleich wird die elektrische Verbindung zu der ersten Speichergruppe 40 gelöst, indem das Anschlussmittel 54 außer Eingriff mit dem Anschlussmittel 44 gelangt. Dann kann die zweite Speichergruppe 50 aus dem Gehäuse 10 genommen werden. Anschließend kann die erste Speichergruppe 40 zunächst entgegen der Pfeilrichtung 101 verschoben, so dass das Befestigungsstück 62 in den breiteren Teil der Öffnung 49 gelangt. Zugleich wird die elektrische Verbindung zu der Anschlussplatine 60 gelöst, indem das Anschlussmittel 45 außer Eingriff mit dem Steckverbinder 61 gelangt. Dann kann die erste Speichergruppe 40 aus dem Gehäuse 10 genommen werden.

Alternativ ist es möglich, die Speichergruppen 40, 50 gemeinsam entgegen der Pfeilrichtung 101 zu verschieben, wodurch die mechanische Befestigung durch die Befestigungsstücke 62 und die elektrische Verbindung mit dem Steckverbinder 61 gelöst wird. Danach können die Speichergruppen 40, 50 insbesondere gemeinsam aus dem Gehäuse entnommen werden. Die elektrochemischen Energiespeicher 21 sind durch die elektrischen Anschlüsse 42, 52 von der Platine 43, 53 beabstandet. Hierdurch wird ein Wärmeeintrag in die elektrochemischen Energiespeicher von einer Rückwand 22 der Halterung verringert. Das Einbindungselement 41, 51 überragt in einer Draufsicht die elektrochemischen Energiespeicher 21. Anders ausgedrückt ist die Breite b der Einbindungselemente 41, 51 größer als die Breite der elektrochemischen Energiespeicher 21. Somit sind die elektrochemischen Energiespeicher 21 von Seitenwänden 25, 26 der Halterung 20 beabstandet. Hierdurch wird ein Wärmeeintrag in die elektrochemischen Energiespeicher 21 von der Seitenwänden 25, 26 der Halterung 20 vermieden.

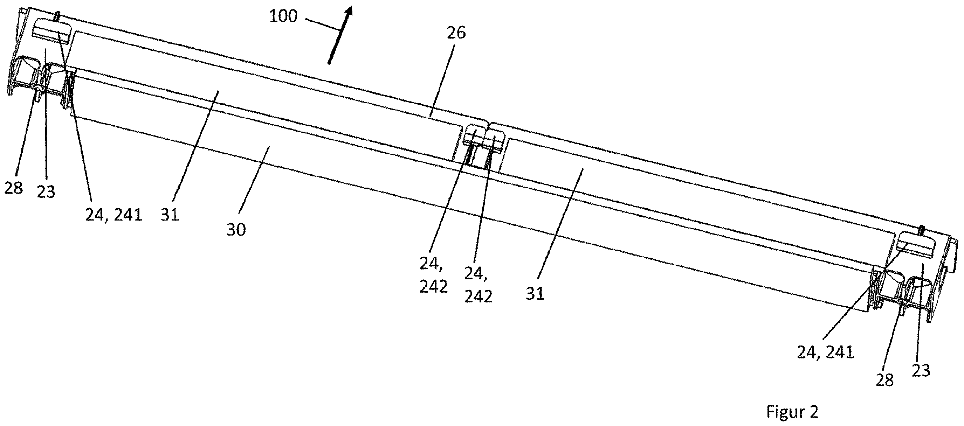

Die Feststellvorrichtung 1 umfasst eine Auslösevorrichtung 30, die in den Figuren 2 und 3 dargestellt ist. Die Auslösevorrichtung 30 dient dazu, bei einer Auslösetemperatur das Gehäuse 10 zu öffnen. Durch die Öffnung des Gehäuses 10 kann eine zu starke Erwärmung der elektrochemischen Energiespeicher 21 verhindert werden. Hierdurch kann auch bei der Auslösetemperatur die Sicherheit der Feststellvorrichtung 1 gewährleistet sein. Die Auslösevorrichtung 30 ist aus intumeszierendem Material ausgebildet. Bei der Auslösetemperatur vergrößert sich das Volumen der Auslösevorrichtung 30 sprunghaft, insbesondere um ein Vielfaches. Die Volumenvergrößerung kann oberhalb der Auslösetemperatur weitergeführt sein. Die Volumenvergrößerung des intumeszierenden Materials kann durch eine Verdampfung insbesondere von Wasser verursacht sein. Dadurch, dass die Auslösevorrichtung 30 aus intumeszierendem Material ist, wird das Gehäuse 10 besonders zuverlässig geöffnet.

Die Auslösevorrichtung 30 öffnet das Gehäuse 10, indem die Blende 13 gemäß einer Bewegungsrichtung 100 von dem übrigen Gehäuse wegbewegt wird. Die Auslösevorrichtung 30 öffnet das Gehäuse 10, indem die Auslösevorrichtung 30 die Halterung 20 in Bewegungsrichtung 100 bewegt, insbesondere verschiebt oder verschwenkt. Die Halterung 20 wiederrum bewegt die Blende 13.

Die Auslösevorrichtung 30 bewegt die Halterung 20 mit den elektrochemischen Energiespeichern 21 durch die Volumenvergrößerung zumindest teilweise aus dem Gehäuse 10 gemäß der Bewegungsrichtung 100 heraus. Unter einer Bewegung aus dem Gehäuse 10 wird eine Bewegung aus einem Zwischenraum zwischen Oberseite 15 und Unterseite 16 heraus verstanden. Insbesondere bewegt sich die Halterung 20 mit den elektrochemischen Energiespeichern 21 teilweise aus dem zweiten Aufnahmeraum 7 heraus. Hierdurch kann besonders gut eine starke Erwärmung der elektrochemischen Energiespeicher 21 verhindert werden. Die Halterung 20 mit den elektrischen Energiespeichern 21 befindet sich nach der Volumenvergrößerung des Auslöseelements 30 teilweise außerhalb des Raumes zwischen Oberseite 15 und Unterseite 16.

Die Auslösevorrichtung 30 ist zwischen der Halterung 20 und der Rückseite 11 angeordnet. Die Auslösevorrichtung 30 liegt an der Halterung 20 an. Bevorzugt ist die Auslösevorrichtung 30 mit der Halterung 20 verbunden, insbesondere verklebt. Hierdurch wird die Halterung 20 bei einer teilweisen Bewegung der Halterung 20 aus dem Gehäuse 10 gehalten. Hierdurch wird ein Herunterfallen der Halterung 20 verhindert.

Die Auslösevorrichtung 30 kann plattenartig ausgebildet sein. Die Halterung 20 weist die Rückwand 22 auf. Die Rückwand 22 weist zur Rückseite 11 des Gehäuses 10. Die Auslösevorrichtung 30 kann an der Rückwand 22 anliegen, insbesondere mit der Rückwand 22 verbunden sein. Wie in Figur 2 gezeigt, bedeckt die Auslösevorrichtung 30 die Rückwand 22 mit Ausnahme von Endbereichen 23 der Halterung 20. Die Endbereiche 23 sind im Bereich der Rückwand 22 stegförmig ausgebildet. Hierdurch ist der Wärmeeintrag über die Endbereiche 23 gering.

Die Halterung 20 umfasst Elemente 24. Die Elemente 24 können zumindest teilweise als Rückhalteelemente 241 dienen. Die Rückhalteelemente 241 dient dazu, die Halterung 20 teilweise bei der Volumenvergrößerung des Auslöseelements 30 in dem Gehäuse 10 zurückzuhalten. Hierbei dienen die Rückhalteelemente 241 als Schwenkachse. Hierdurch kann die Halterung 20 vor einem Herunterfallen bewahrt werden. Die als Schwenkachse dienenden Rückhalteelemente 241 sind bevorzugt im Bereich der Endbereiche 23 angeordnet. Somit befinden sich die als Schwenkachse dienenden Rückhalteelemente 241 schräg neben der Auslösevorrichtung 30.

Die Halterung 20 umfasst die Seitenwände 25, 26, insbesondere eine obere Seitenwand 25 und eine untere Seitenwand 26.

Die untere Seitenwand 26 dient dazu, nach der Volumenvergrößerung des Auslöseelements 30 außerhalb des Gehäuses 10 zwischen den elektrochemischen Energiespeichern 21 und dem Raumboden sich zu befinden. Hierdurch kann Wärme von den elektrochemischen Energiespeichern 21 abgehalten werden.

Die Seitenwände 25, 26 dienen zur Führung der Halterung 20 bei der Bewegung der Halterung 20 während der Volumenvergrößerung des Auslöseelements 30. Hierzu liegt die obere Seitenwand 25 an der Oberseite 15 an. Unterhalb der Auslösetemperatur sind die Seitenwände 25, 26 beabstandet von der oberen- bzw- unteren Gehäuseseite 15, 16. Hierzu dienen die Elemente 24, die Beabstandungselementen 24 entsprechen. Die Beabstandungselemente 24 beanstanden die Seitenwände 25, 26 von der oberen- bzwunteren Gehäuseseite 15, 16. Hierzu ragen die Beabstandungselemente 24 von den Seitenwänden 25, 26 ab. Die Beabstandungselemente 24 sind in einer zur Rückseite 11 entfernten Hälfte der Seitenwände 25, 26 angeordnet.

In dem Zwischenraum zwischen den Seitenwänden 25, 26 und der Ober- bzw. Unterseite 15, 16 sind Kühlelemente 31 angeordnet. Die Kühlelemente 31 sind als intumeszierendem Material ausgebildet. Die Kühlelemente 31 schützen die elektrochemischen Energiespeicher 21 vor einer Erwärmung, indem die Kühlelemente 31 oberhalb der Intumenszenztemperatur eine Kühlung bewirken.

Die Halterung 20 ist unterhalb der Auslösetemperatur innerhalb des Gehäuses 10, insbesondere innerhalb des zweiten Aufnahmeraums 7, befestigt. Die Halterung 20 umfasst Anlageflächen 27. Die Anlageflächen 27 liegen an den Vorsprüngen 19 an. Die Elemente 24 umfassen die Anlageflächen 27.

Die Halterung 20 ist in dem Gehäuse 10 verspannt. Hierzu umfasst die Türvorrichtung 1 ein nicht dargestelltes Verspannungsmittel. Das Verspannungsmittel ist z. B. als eine oder mehrere Schraube ausgebildet. Das Verspannungsmittel ist in der Halterung 20 befestigt. Das Verspannungsmittel ist bevorzugt in der Rückwand 22, insbesondere in den Endbereichen 23, befestigt. Hierzu können die Endbereiche 23 Verspannungsmittelaufnahmen 28 umfassen (s. Figur 2).

Das Verspannungsmittel, insbesondere eine Spitze der Schraube, liegt an der Zwischenwand 18 an. Somit wird durch das Verspannungsmittel und die Anlageflächen 27 die Halterung 20 in dem Gehäuse 10, insbesondere in dem zweiten Aufnahmeraum 7, verspannt.

Das Verspannungsmittel beabstandet die Halterung 20 von der Zwischenwand 18. Hierdurch wird der Wärmeeintrag in die Halterung 20 verringert. Somit dient das Verspannungsmittel zugleich als ein Beabstandungsmittel.

Durch den Formschluss der Anlageflächen 23 mit den Vorsprüngen 19 ist die Halterung 20 in der Bewegungsrichtung 100 unterhalb der Auslösetemperatur formschlüssig gehalten. Die Anlageflächen 23 dienen somit als Formschlussmittel. Bei einer Volumenvergrößerung wird der Formschluss der Anlageflächen 23 mit den Vorsprüngen 19 zumindest teilweise aufgehoben. Durch die Volumenvergrößerung bricht zumindest ein Teil der Elemente 24 und damit der Anlageflächen 23 von der übrigen Halterung 20 ab. Insbesondere brechen die Elemente 24, die in Bewegungsrichtung 100 vor der Auslösevorrichtung 30 angeordnet sind und in den Figuren mit dem Bezugszeichen 242 versehen sind, ab. Somit brechen die Elemente 24, die nicht in den Endbereichen 23 angeordnet sind und in den Figuren mit dem Bezugszeichen 242 versehen sind, ab.

Somit dienen die Elemente 24 teilweise als Rückhaltemittel 241 und ein Teil 242 der Elemente 24 ermöglichen durch ein Abbrechen die Aufhebung des Formschluss und die Öffnung des Gehäuses 10. Alle Elemente 24 dienen als Beabstandungselemente und alle Elemente 24 umfassen Anlageflächen als Formschlussmittel.

Die Halterung 20 umfasst Befestigungselemente 29 zum Befestigen der Blende 13. Die Blende 13 ist magnetisch an den Befestigungselementen 29 befestigt. Die Halterung 20 ist des Weiteren derart ausgebildet, dass die Blende 13 auf der Halterung 20 aufliegt.

Die Feststellvorrichtung 1 umfasst Befestigungsvorrichtungen 9, an denen die Blende 13 befestigt ist. Die Befestigungsvorrichtungen 9 sind außerhalb der Halterung 20 angeordnet. Die Blende 13 ist magnetisch an den Befestigungsvorrichtungen 9 befestigt.

Die Blende 13 ist biegsam ausgebildet. Die Blende 13 ist aus Kunststoff gefertigt. Durch die Volumenvergrößerung biegt sich die Blende 13 und ermöglicht somit eine Bewegung der Halterung 20 aus dem Gehäuse 10 heraus. Auch nach der Volumenvergrößerung ist die Blende 13 zumindest teilweise an zumindest einem der Befestigungselementen 29 oder Befestigungsvorrichtungen 9 befestigt.

Die Halterung 20 ist mehrteilig ausgebildet. Insbesondere nimmt jedes Teil der Halterung 20 eine Speichergruppe 40, 50 auf. Durch die mehrteilige Halterung 20 ist es möglich, die Teile der Halterung bei der Volumenvergrößerung einzeln zu verschwenken. Hierzu kann insbesondere die Auslösevorrichtung 30 entsprechend geteilt sein.

## Patentansprüche

1. Feststellvorrichtung für eine Brandschutztür,
mit einem Gehäuse (10) und
mit mehreren elektrochemischen Energiespeichern (21) zur Energieversorgung der Feststellvorrichtung (1),
**dadurch gekennzeichnet, dass**
die Feststellvorrichtung (1) zumindest zwei Speichergruppen (40, 50) umfasst, wobei jede Speichergruppe (40, 50) zumindest einen der elektrochemischen Energiespeicher (21) und ein Einbindungselement (41, 51) zum Einbinden des zumindest einen elektrochemischen Energiespeichers (21) in die übrige Feststellvorrichtung (1) umfasst,
wobei der gesamte Lithiumgehalt der elektrochemischen Energiespeicher (21) jeder Speichergruppe (40, 50) unter 2 g liegt.

2. Feststellvorrichtung (1) nach Anspruch 1, **dadurch gekennzeichnet, dass** der elektrochemische Energiespeicher (21) mit dem jeweiligen Einbindungselement (41, 51) stoffschlüssig verbunden ist.

3. Feststellvorrichtung (1) nach Anspruch 1 oder 2, **dadurch gekennzeichnet, dass** das Einbindungselement (41, 51) elektrische Anschlüsse (43, 53) zum elektrischen Anschließen des elektrochemischen Energiespeichers (21) umfasst, wobei insbesondere durch den elektrischen Anschluss zugleich der elektrochemische Energiespeicher (21) mechanisch, insbesondere stoffschlüssig, an dem Einbindungselement (41, 51) befestigt ist.

4. Feststellvorrichtung (1) nach einem der vorhergehenden Ansprüche, **dadurch gekennzeichnet, dass** die Speichergruppen (40, 50) in dem Gehäuse (10) elektrisch miteinander verbunden sind, wobei die Speichergruppen (40, 50), insbesondere die Einbindungselemente (41, 51), elektrische, reversibel lösbare Anschlussmittel (44, 54, 55) zum elektrischen Verbinden der Speichergruppen untereinander umfassen.

5. Feststellvorrichtung (1) nach einem der vorhergehenden Ansprüche, **dadurch gekennzeichnet, dass** das Einbindungselement (41, 51) elektrische Anschlussmittel (44, 54, 45, 55) zum Anschließen an einen Energieverbraucher der Feststellvorrichtung (1), insbesondere einer Steuerungsvorrichtung (5), umfasst.

6. Feststellvorrichtung (1) nach einem der vorhergehenden Ansprüche, **dadurch gekennzeichnet, dass** das Einbindungselement (41, 51) derart in das Gehäuse (10) einsetzbar ist, dass zugleich mit einem mechanischen Befestigungsschritt ein elektrisches Anschließen des elektrochemischen Energiespeichers (21) erfolgt, insbesondere, dass ein Anschlussmittel (44, 54, 45, 55) zeitgleich mit dem mechanischen Befestigungsschritt elektrisch kontaktiert wird.

7. Feststellvorrichtung (1) nach einem der vorhergehenden Ansprüche, **dadurch gekennzeichnet, dass** das Einbindungselement (41, 51) eine Platine (43, 53) umfasst, wobei insbesondere der elektrochemische Energiespeicher (21) zumindest mittelbar auf der Platine (43, 53) befestigt, insbesondere festgelötet oder verschweißt, ist.

8. Feststellvorrichtung (1) nach einem der vorhergehenden Ansprüche, **dadurch gekennzeichnet, dass** das Einbindungselement (41, 51) ein Halteelement (46, 56) zur Halterung der Platine (43, 53) und/oder zum Schutz der elektrischen Leiter der Platine (43, 53) umfasst, wobei insbesondere das Halteelement (46, 56) und die Platine (43, 53) reversibel lösbar miteinander verbunden ist.

9. Feststellvorrichtung (1) nach einem der vorhergehenden Ansprüche, **dadurch gekennzeichnet, dass** das Einbindungselement (41, 51) ein Verbindungsmittel (47, 57) zum mechanischen Verbinden mit einem weiteren Einbindungselement (41, 51) umfasst und/oder das Einbindungselement (41, 51) ein Verbindungselement (49, 59) zum mechanischen Verbinden mit einem weiteren Element (20) der Feststellvorrichtung (1), umfasst.

10. Feststellvorrichtung (1) nach einem der vorhergehenden Ansprüche, **dadurch gekennzeichnet, dass** mehrere Speichergruppen (40, 50) identisch zueinander ausgebildet sind.

11. Feststellvorrichtung (1) nach einem der vorhergehenden Ansprüche, **dadurch gekennzeichnet, dass** jede Speichergruppe (40, 50) mehrere elektrochemische Energiespeicher (21) umfasst.

12. Feststellvorrichtung (1) nach einem der vorhergehenden Ansprüche, **dadurch gekennzeichnet, dass** die Speichergruppen (40, 50) einzeln reversibel lösbar in das Gehäuse (10) einsetzbar sind, wobei insbesondere die Feststellvorrichtung (1) eine abnehmbare Blende (13) umfasst und nach Abnehmen der Blende (13) die Speichergruppen (40, 50) in das Gehäuse (10) einsetzbar sind.

13. Feststellvorrichtung (1) nach einem der vorhergehenden Ansprüche, **dadurch gekennzeichnet, dass** die Feststellvorrichtung (1) eine Halterung (20) zur Aufnahme der Speichergruppen (40, 50) umfasst, insbesondere, dass das Einbindungselement (41, 51) derart ausgebildet ist, dass das Einbindungselement (41, 51) den elektrochemischen Energiespeicher (21) von zumindest einer Seitenwand (25, 26) der Halterung (20) beabstandet.

14. Feststellvorrichtung (1) nach einem der vorhergehenden Ansprüche, **dadurch gekennzeichnet, dass** die Feststellvorrichtung (1) eine Rückseite (11) zur Befestigung an eine Wand oder eine Tür umfasst, wobei zwischen der Rückseite (11) der Feststellvorrichtung (1) und den Speichergruppen (40, 50), insbesondere zwischen der Rückseite (11) der Feststellvorrichtung (1) und der Halterung (20), ein Brandschutzmaterial (30) angeordnet ist, insbesondere, dass das Brandschutzmaterial (30) als ein intumeszierendes Material ausgebildet ist, wobei durch das Brandschutzmaterial (30) im Brandfall die Speichergruppen (40, 50) von der Rückseite (11) wegbewegbar sind.

15. Brandschutztür mit einer Feststellvorrichtung (1) nach einem der vorhergehenden Ansprüche.

## Claims

1. A hold-open device for a fire-rated door,
with a housing (10) and
with several electro-chemical energy accumulators (21) for energy supply to the hold-open device (1),
**characterized in that** the hold-open device (1) comprises at least two accumulator groups (40, 50), wherein each accumulator group (40, 50) comprises at least one of the electro-chemical energy accumulators (21) and an integration element (41, 51) for integrating the at least one electro-chemical energy accumulator (21) into the rest of the hold-open device (1),
wherein the entire lithium content of the electro-chemical energy accumulators (21) of each accumulator group (40, 50) is less than 2 g.

2. The hold-open device (1) according to claim 1, **characterized in that** the electro-chemical energy accumulator (21) is fused to the respective integration element (41, 51).

3. The hold-open device (1) according to claim 1 or 2, **characterized in that** the integration element (41, 51) comprises electric connections (43, 53) for electrically connecting the electro-chemical energy accumulator (21), wherein in particular the electric connection simultaneously connects mechanically, in particular fuses, the electro-chemical energy accumulator (21) to the integration element (41, 51).

4. The hold-open device (1) according to any of the preceding claims, **characterized in that** the accumulator groups (40, 50) are electrically connected to each other in the housing (10), wherein the accumulator groups (40, 50), in particular the integration elements (41, 51), comprise electric reversibly releasable connecting means (44, 54, 55) for electrically connecting the accumulator groups among each other.

5. The hold-open device (1) according to any of the preceding claims, **characterized in that** the integration element (41, 51) comprises electric connecting means (44, 54, 45, 55) for connecting to an energy consumer of the hold-open device (1), in particular of a control device (5).

6. The hold-open device (1) according to any of the preceding claims, **characterized in that** the integration element (41, 51) is insertable into the housing (10) such that, simultaneously with a mechanic fastening step, is realized electrically connecting the electro-chemical energy accumulator (21), in particular **in that** a connecting means (44, 54, 45, 55) is electrically contacted at the same time with the mechanic fastening step.

7. The hold-open device (1) according to any of the preceding claims, **characterized in that** the integration element (41, 51) comprises a printed circuit board (43, 53), wherein in particular the electro-chemical energy accumulator (21) is fastened at least indirectly to the printed circuit board (43, 53), in particular soldered or welded.

8. The hold-open device (1) according to any of the preceding claims, **characterized in that** the integration element (41, 51) comprises a retaining element (46, 56) for retaining the printed circuit board (43, 53) and/or for protecting the electric conductors of the printed circuit board (43, 53), wherein in particular the retaining element (46, 56) and the printed circuit board (43, 53) are reversibly releasably connected to each other.

9. The hold-open device (1) according to any of the preceding claims, **characterized in that** the integration element (41, 51) comprises connecting means (47, 57) for mechanically connecting to a further integration element (41, 51) and/or the integration element (41, 51) comprises a connecting element (49, 59) for mechanically connecting to a further element (20) of the hold-open device (1).

10. The hold-open device (1) according to any of the preceding claims, **characterized in that** several accumulator groups (40, 50) are formed identically to each other.

11. The hold-open device (1) according to any of the preceding claims, **characterized in that** each accumulator group (40, 50) comprises several electro-chemical energy accumulators (21).

12. The hold-open device (1) according to any of the preceding claims, **characterized in that** the accumulator groups (40, 50) are individually reversibly releasably insertable into the housing (10), wherein in particular the hold-open device (1) comprises a removable screen (13) and once the screen (13) is removed, the accumulator groups (40, 50) are insertable into the housing (10).

13. The hold-open device (1) according to any of the preceding claims, **characterized in that** the hold-open device (1) comprises a mount (20) for receiving the accumulator groups (40, 50), in particular **in that** the integration element (41, 51) is formed such that the integration element (41, 51) spaces the electro-chemical energy accumulator (21) at least from a lateral wall (25, 26) of the mount (20).

14. The hold-open device (1) according to any of the preceding claims, **characterized in that** the hold-open device (1) comprises a back side (11) for attaching to a wall or to a door, wherein between the back side (11) of the hold-open device (1) and the accumulator groups (40, 50), in particular between the back side of the hold-open device (1) and the mount (20), is disposed fire-protection material (30), in particular **in that** the fire-protection material (30) is formed as intumescent material, wherein, in case of fire, the fire protection material (30) can move the accumulator groups (40, 50) away from the back side (11).

15. A fire-rated door with a hold-open device (1) according to any of the preceding claims.

## Revendications

1. Dispositif de retenue pour une porte coupe-feu,
avec un boîtier (10) et
avec plusieurs accumulateurs d'énergie électrochimique (21) pour l'alimentation en énergie du dispositif de retenue (1),
**caractérisé en ce que** le dispositif de retenue (1) comporte au moins deux groupes d'accumulateurs (40, 50), chaque groupe d'accumulateurs (40, 50) comportant au moins un des accumulateurs d'énergie électrochimique (21) et un élément d'intégration (41, 51) pour intégrer au moins un accumulateur d'énergie électrochimique (21) dans le reste du dispositif de retenue (1),
l'ensemble du taux de lithium des accumulateurs d'énergie électrochimique (21) de chaque groupe d'accumulateurs (40, 50) étant moins de 2 g.

2. Dispositif de retenue (1) selon la revendication 1, **caractérisé en ce que** l'accumulateur d'énergie électrochimique (21) est connecté par liaison moléculaire à l'élément d'intégration (41, 51) respectif.

3. Dispositif de retenue (1) selon la revendication 1 ou 2, **caractérisé en ce que** l'élément d'intégration (41, 51) comporte des connecteurs électriques (43, 53) pour connecter électriquement l'accumulateur d'énergie électrochimique (21), tout particulièrement la connexion électrique attachant simultanément l'accumulateur d'énergie électrochimique (21) mécaniquement, tout particulièrement par liaison moléculaire, à l'élément d'intégration (41, 51).

4. Dispositif de retenue (1) selon l'une des revendications précédentes, **caractérisé en ce que** les groupes d'accumulateurs (40, 50) sont connectés électriquement les uns aux autres dans le boîtier (10), les groupes d'accumulateurs (40, 50), tout particulièrement les éléments d'intégration (41, 51) comportent des moyens électriques de liaison (44, 54, 55) réversiblement amovibles pour connecter électriquement les groupes d'accumulateurs les uns aux autres.

5. Dispositif de retenue (1) selon l'une des revendications précédentes, **caractérisé en ce que** l'élément d'intégration (41, 51) comporte des moyens électriques de liaison (44, 54, 45, 55) pour les lier à un consommateur d'énergie du dispositif de retenue (1), tout particulièrement à un dispositif de commande (5).

6. Dispositif de retenue (1) selon l'une des revendications précédentes, **caractérisé en ce que** l'élément d'intégration (41, 51) peut être introduit dans le boîtier (10) que simultanément avec une étape de raccordement mécanique, se fait une liaison électrique de l'accumulateur d'énergie électrochimique (21), tout particulièrement qu'un moyen de liaison (44, 54, 45, 55) est contacté électriquement en même temps avec l'étape de raccordement mécanique.

7. Dispositif de retenue (1) selon l'une des revendications précédentes, **caractérisé en ce que** l'élément d'intégration (41, 51) comporte une platine (43, 53), tout particulièrement l'accumulateur d'énergie électrochimique (21) est raccordé au moins indirectement sur la platine (43, 53), tout particulièrement brasé ou soudé.

8. Dispositif de retenue (1) selon l'une des revendications précédentes, **caractérisé en ce que** l'élément d'intégration (41, 51) comporte un élément de maintien (46, 56) pour soutenir la platine (43, 53) et/ou pour protéger les conducteurs électriques de la platine (43, 53), tout particulièrement l'élément de maintien (46, 56) et la platine (43, 53) étant connectés de façon réversible et amovible.

9. Dispositif de retenue (1) selon l'une des revendications précédentes, **caractérisé en ce que** l'élément d'intégration (41, 51) comporte un moyen de connexion (47, 57) pour connecter mécaniquement à un autre élément d'intégration (41, 51) et/ou l'élément d'intégration (41, 51) comporte un élément de connexion (49, 59) pour connecter mécaniquement à un autre élément (20) du dispositif de retenue (1).

10. Dispositif de retenue (1) selon l'une des revendications précédentes, **caractérisé en ce que** plusieurs groupes d'accumulateurs (40, 50) sont aménagés identiquement les uns aux autres.

11. Dispositif de retenue (1) selon l'une des revendications précédentes, **caractérisé en ce que** chaque groupe d'accumulateurs (40, 50) comporte plusieurs accumulateurs d'énergie électrochimique (21).

12. Dispositif de retenue (1) selon l'une des revendications précédentes, **caractérisé en ce que** les groupes d'accumulateurs (40, 50) peuvent être introduits individuellement de façon réversible amovible dans le boîtier (10), tout particulièrement le dispositif de retenue (1) comportant un écran (13) détachable et les groupes d'accumulateurs (40, 50) pouvant être introduits dans le boîtier (10) une fois l'écran (13) détaché.

13. Dispositif de retenue (1) selon l'une des revendications précédentes, **caractérisé en ce que** le dispositif de retenue (1) comporte une fixation (20) pour la réception des groupes d'accumulateurs (40, 50), tout particulièrement que l'élément d'intégration (41, 51) est aménagé de telle façon que l'élément d'intégration (41, 51) éloigne l'accumulateur d'énergie électrochimique (21) au moins d'une paroi latérale (25, 26) de la fixation (20).

14. Dispositif de retenue (1) selon l'une des revendications précédentes, **caractérisé en ce que** le dispositif de retenue (1) comporte une face arrière (11) pour l'attachement sur une paroi ou une porte, de la matière de protection contre incendies (30) étant agencée entre la face arrière (11) du dispositif de retenue (1) et les groupes d'accumulateurs (40, 50), tout particulièrement entre la face arrière (11) du dispositif de retenue (1) et la fixation (20), tout particulièrement que la matière de protection contre incendies (30) est aménagée comme matière intumescente, en cas de feu, la matière de protection contre incendies (30) pouvant déplacer les groupes d'accumulateurs (40, 50) en les éloignant de la face arrière (11).

15. Porte coupe-feu d'un dispositif de retenue (1) selon l'une des revendications précédents.
